# EUROPEAN PATENT APPLICATION

(11) **EP 2 439 634 A2**
(43) Date of publication of application: **11.04.2012**
(21) Application number: 11183418.0
(22) Date of filing: 30.09.2011
(51) Int. Cl.: G06F 3/12

(54) **Printing option display method and printing option display apparatus**

(30) Priority: 06.10.2010 KR 20100097459
(71) Applicant: Samsung Electronics Co., Ltd., Suwon-si, Gyeonggi-do (KR)
(72) Inventor: Kim, Mun Sik, Gyeonggi-do (KR); Yoon, Tae Sun, Gyeonggi-do (KR)
(74) Representative: Bruce, Alexander Richard Henry

(57) **Abstract**

If a user inputs a desired printing option, a preview screen depending on the input printing option is displayed on the touchscreen. Then, if first and second touch input points are detected on the preview screen and a distance between the first and second touch input points is changed, a preview screen, a set value of the input printing option has been changed by the user, is displayed. Thereby, the number of pages contained in a preview image, the number of sheets of paper corresponding to the number of split parts of an object displayed on the preview image, the paper size of the preview image, or the size of the preview image may be changed and displayed, which enables convenient and rapid intuitive setting of N-UP, poster, paper size and actual image size printing options.

## Description

The present invention relates to a printing option display method and printing option display apparatus to display printing options on a terminal having a touchscreen.

Recently, applications for use in mobile devices, such as smart phones, PDAs and laptop computers, which assist in printing contents of mobile devices using a printer, have been developed.

These applications provide a printing option screen to allow a user to set various printing options, including paper size, image size, N-UP function, etc.

An N-UP function is a function of printing a plurality of pages on a single side of paper. The user may set the N-UP function by selecting the number of pages to be printed on a single side of paper on the printing option screen.

In one example of setting an N-UP printing option, conventionally, if the user selects the number of pages that the user desires to print on a single side of paper, e.g., "2" using an N-UP printing option icon on the printing option screen and pushes a complete button, a preview screen, a preview image of which contains 2 pages, is displayed.

Then, if the user desires to change the number of pages to be printed on a single side of paper from 2 to 4, the user returns to the printing option screen and thereafter, sets a desired number of pages to be printed on a single side of paper to "4" using the N-UP printing option icon and pushes the complete button. Thereby, the resulting preview screen displays a preview image containing 4 pages.

In the above described conventional method, however, in order to set optimum printing options that the user desires, it may be necessary for the user to repeatedly select set values and confirm the selected results while moving between several screens, which causes inconvenient and less intuitive setting of printing options. Moreover, in the case of mobile devices having limited screen size, the chance of the user failing to push correct buttons is high owing to small button size, which results in inconvenience in setting of printing options.

Therefore, it is an aspect of the present disclosure to provide a printing option display method and printing option display apparatus, in which printing options to be displayed are set via multi-touch of a preview image of a preview screen on a touchscreen, to enable convenient and intuitive setting of printing options.

Additional aspects of the disclosure will be set forth in part in the description which follows and, in part, will be apparent from the description, or may be learned by practice of the disclosure.

In accordance with one aspect of the present disclosure, a printing option display method to display a printing option on an apparatus having a multi-touch input touchscreen, includes receiving a printing option selected and input by a user, displaying a preview image to be printed on a single side of paper on the touchscreen if the input printing option is an N-UP printing option, and detecting first and second touch input points on the touchscreen, and displaying a preview image, the number of pages to be printed on the single side of paper has been changed, if a distance between the first and second touch input points is changed.

Displaying the changed preview image may include changing the number of pages to be printed on the single side of paper from the initial preview image according to the distance between the first and second touch input points.

Changing the number of pages may include increasing the number of pages as the distance between the first and second touch input points is reduced and reducing the number of pages as the distance between the first and second touch input points is increased.

The printing option display method may further include displaying a preview image, which contains the number of pages depending on the distance between the first and second touch input points before touch release occurs once the first and second touch inputs have been released.

In accordance with another aspect of the present disclosure, a printing option display method to display a printing option on an apparatus having a multi-touch input touchscreen, includes receiving a printing option selected and input by a user, displaying a preview image containing an object to be printed on the touchscreen if the input printing option is a poster printing option, and detecting first and second touch input points on the touchscreen, and displaying a preview image, the image displayed on the initial preview image has been split by a plurality of sheets of paper, if a distance between the first and second touch input points is changed.

Displaying the changed preview image may include changing the number of sheets of paper, by which the object displayed on the initial preview image is split, according to the distance between the first and second touch input points.

Changing the number of sheets of paper may include increasing the number of sheets of paper corresponding to the number of split parts of the object as the distance between the first and second touch input points is reduced and reducing the number of sheets of paper corresponding to the number of split parts of the object as the distance between the first and second touch input points is increased. The printing option display method may further include displaying a preview image, which contains having the number of sheets of paper depending on the distance between the first and second touch input points before touch release occurs, once the first and second touch inputs have been released.

In accordance with another aspect of the present disclosure, a printing option display method to display a printing option on an apparatus having a multi-touch input touchscreen, includes receiving a printing option selected and input by a user, displaying a preview image representing a paper size on the touchscreen if the input printing option is a paper size printing option, and detecting first and second touch input points on the touchscreen, and displaying a preview image, the paper size of which has been changed on a per paper size basis, if a distance between the first and second touch input points is changed.

Displaying the changed preview image may include changing the paper size of the preview image according to the distance between the first and second touch input points.

Changing the paper size may include reducing the paper size as the distance between the first and second touch input points is reduced and increasing the paper size as the distance between the first and second touch input points is increased.

The printing option display method may further include displaying a preview image having the paper size depending on the distance between the first and second touch input points before touch release occurs once the first and second touch inputs have been released.

In accordance with another aspect of the present disclosure, a printing option display method to display a printing option on an apparatus having a multi-touch input touchscreen, includes receiving a printing option selected and input by a user, displaying a preview image representing an image size on the touchscreen if the input printing option is an image size printing option, and detecting first and second touch input points on the touchscreen, and displaying a preview image, the image size of which has been changed, if a distance between the first and second touch input points is changed.

Displaying the changed preview image may include changing the size of the preview image according to the distance between the first and second touch input points. Changing the image size may include reducing the image size as the distance between the first and second touch input points is reduced and increasing the image size as the distance between the first and second touch input points is increased. The printing option display method may further include displaying a preview image having the image size depending on the distance between the first and second touch input points before touch release occurs once the first and second touch inputs have been released.

In accordance with another aspect of the present disclosure, a printing option display method of an apparatus having a multi-touch input touchscreen, includes receiving any one of a plurality of printing options input by a user, displaying a preview screen depending on the input printing option on the touchscreen, and detecting first and second touch input points on the preview screen, and displaying a preview screen, a set value of the input printing option has been changed, if a distance between the first and second touch input points is changed.

The input printing option may include any one of N-UP, poster, paper size and image size.

If the input printing option is N-UP, the number of pages contained in a preview image displayed on the preview screen may be changed according to the distance between the first and second touch input points.

If the input printing option is poster, the number of sheets of paper, by which an object of a preview image displayed on the preview screen is split, may be changed according to the distance between the first and second touch input points.

If the input printing option is paper size, the paper size of a preview image displayed on the preview screen may be changed according to the distance between the first and second touch input points.

If the input printing option is image size, the size of a preview image displayed on the preview screen may be changed according to the distance between the first and second touch input points.

In accordance with a further aspect of the present disclosure, a printing option display apparatus includes a multi-touch input touchscreen, and a controller, which displays a preview screen, depending on a selected one of a plurality of printing options input by a user, on the touchscreen, detects first and second touch input points on the preview screen, and displays a preview screen, a set value of the input printing option has been changed, if a distance between the first and second touch input points is changed.

These and/or other aspects of the disclosure will become apparent and more readily appreciated from the following description of the embodiments, taken in conjunction with the accompanying drawings of which:
FIG. 1 is a diagram illustrating a configuration of a printing system including a printing option display apparatus in accordance with an embodiment of the present disclosure;
FIG. 2 is a schematic control block diagram of an image forming apparatus illustrated in FIG. 1;
FIG. 3 is a schematic control block diagram of the printing option display apparatus illustrated in FIG. 1;
FIG. 4 is a view illustrating a printing option screen of the printing option display apparatus in accordance with the embodiment of the present disclosure;
FIG. 5 is a control flowchart illustrating one embodiment of a printing option display method using the printing option display apparatus in accordance with the embodiment of the present disclosure;
FIGS. 6A to 6F are views illustrating motions of the printing option display method of FIG. 5;
FIG. 7 is a control flowchart illustrating another embodiment of the printing option display method using the printing option display apparatus in accordance with the embodiment of the present disclosure;
FIGS. 8A to 8E are views illustrating motions of the printing option display method of FIG. 7;
FIG. 9 is a control flowchart illustrating a further embodiment of the printing option display method using the printing option display apparatus in accordance with the embodiment of the present disclosure;
FIGS. 10A to 10D are views illustrating motions of the printing option display method of FIG. 9;
FIG. 11 is a control flowchart illustrating a still further embodiment of the printing option display method using the printing option display apparatus in accordance with the embodiment of the present disclosure; and
FIGS. 12A to 12D are views illustrating motions of the printing option display method of FIG. 11.

Reference will now be made in detail to the embodiments of the present disclosure, examples of which are illustrated in the accompanying drawings, wherein like reference numerals refer to like elements throughout.

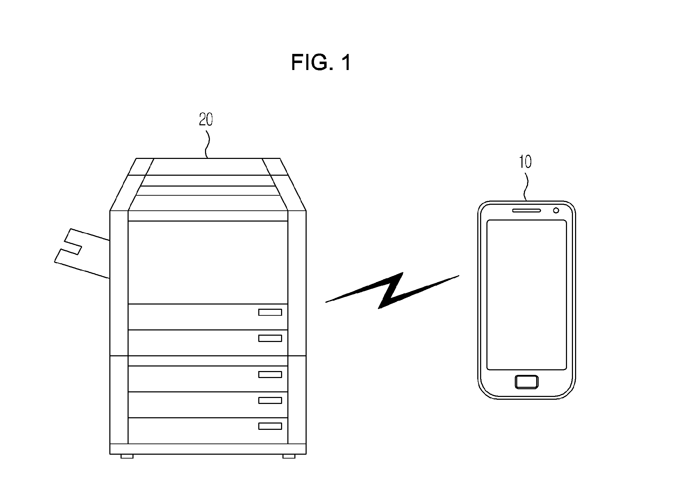

FIG. 1 is a diagram illustrating a configuration of a printing system including a printing option display apparatus in accordance with an embodiment of the present disclosure.

As illustrated in FIG. 1, the printing option display apparatus 10 is connected to an image forming apparatus 20 via a wired or wireless network.

The printing option display apparatus 10 is a multi-touch device having a touchscreen. Examples of the multi-touch device include smart phones, PDAs, laptop computers, etc. which provide a multi-touch function. The printing option display apparatus 10 functions to set printing options of data to be printed, in response to multi-touch user input. The printing option display apparatus 10 also functions to transmit data to be printed and printing option information set by a user to the image forming apparatus 20 in response to a user command. In this case, prior to transmitting data to be printed, the printing option display apparatus 10 may convert the data into a printer language that is interpretable by the image forming apparatus 20 using a printer driver or a printing application.

The image forming apparatus 20 is an appliance that forms an image and prints the formed image on paper.

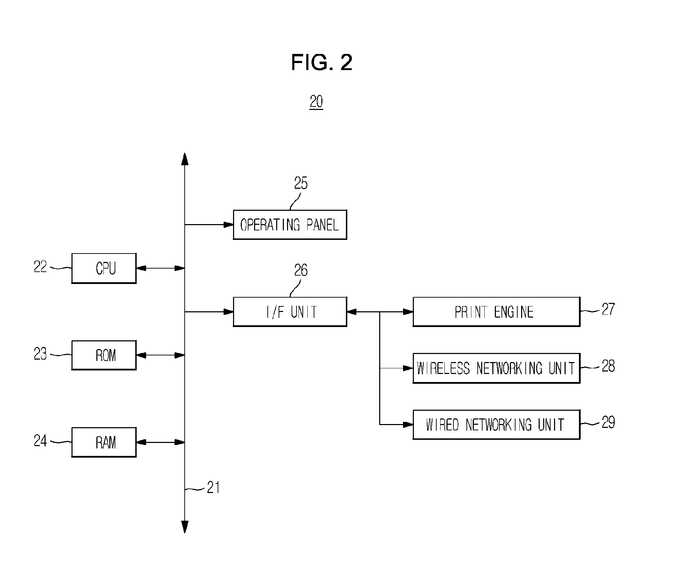

FIG. 2 is a schematic control block diagram of the image forming apparatus illustrated in FIG. 1.

As illustrated in FIG. 2, the image forming apparatus 20 includes a CPU (Central Processing Unit) 22 which controls respective devices connected to a system bus 21. The CPU 22 outputs image signals, as output information, to a print engine 27 based on, e.g., a control program stored in a ROM (Read Only Memory) 23. The ROM 23 stores information or programs for use in the control of the image forming apparatus 20.

A RAM (Random Access Memory) 24, in particular, functions as an operating area of the CPU 22 and a main memory.

An operating panel 25 functions to show information to the user or receive information input by the user.

An I/F unit 26 controls documents to be printed by the print engine 27. A wireless networking unit 28 assists in wireless communication with external devices.

A wired networking unit 29 assists in wired communication with external devices. The image forming apparatus 20 having the above described configuration receives printing data and printing option information from the printing option display apparatus 10 and performs a printing operation in relation to the printing data according to the received printing option information.

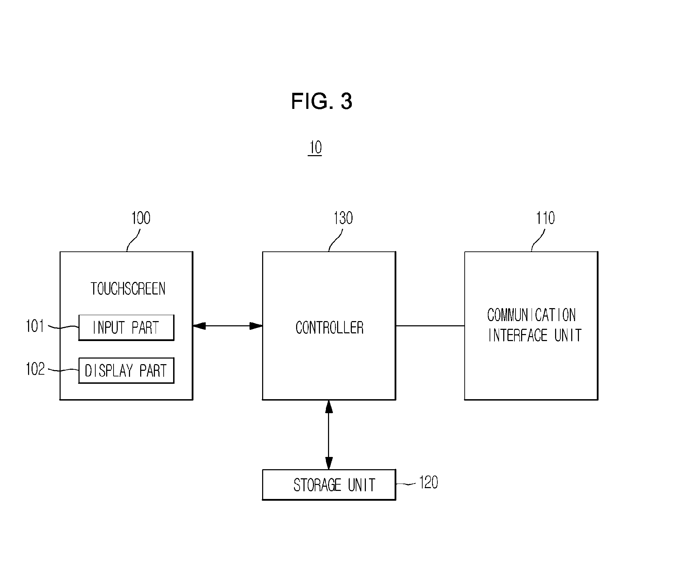

FIG. 3 is a schematic control block diagram of the printing option display apparatus illustrated in FIG. 1.

As illustrated in FIG. 3, the printing option display apparatus 10 includes a touchscreen 100, a communication interface unit 110, a storage unit 120 and a controller 130.

The touchscreen 100 includes an input part 101 to process touch signals input by the user, and a display part 102 to display a screen.

The input part 101 includes a touch panel to detect user touch and functions to obtain information regarding, e.g., selected positions and movement direction from touch signals detected via the touch panel and provide the information to the controller 130. The touch panel of the input part 101 may detect touch signals generated when points a, b are touched, and may be of a capacitance type, so as to detect a plurality of touches. The touch panel takes the form of a transparent panel having a touch sensitive surface and defines a visible surface of the display part 102, e.g., a touchscreen mounted on an LCD (Liquid Crystal Display).

In particular, the input part 101 detects first and second touch inputs and provides the detected touch point information to the controller 130.

The input part 101 may detect multi-touch inputs generated when the user touches the input part unit 101 with his/her fingers or tools or releases the fingers or tools from the input part 101. If the input part 101 detects a first touch, the input part 101 transmits coordinates corresponding to a point where the first touch is detected to the controller 130. Then, if the input part 101 detects a second touch in a state in which the first touch has been maintained, the input part 101 may transmit coordinates corresponding to a point where the second touch is detected to the controller 130.

In one example, the input part 101 of the touchscreen 100, which adopts a capacitance type, includes capacitance switches, such as condensers, on a per pixel basis of the display part 102, in order to confirm a variation in capacitance. Coordinates to confirm touch detected points are allotted on a per pixel basis.

Once a capacitance variation has occurred by the first touch, the input part 101 confirms one of the capacitance switches that detects the capacitance variation by the first touch. Then, the input part 101 transmits coordinates corresponding to a location of the confirmed capacitance switch to the controller 130. Then, if a capacitance variation by the second touch is detected in a state in which the first touch has been maintained, the input part 101 confirms a location where the capacitance variation by the second touch has occurred. Next, the input part 101 transmits second coordinates corresponding to the confirmed location where the capacitance variation by the second touch has occurred to the controller 130.

The display part 102 includes an LCD to display a screen, and converts data signals provided from the controller 130 into image signals that are displayable on the LCD and displays the resulting image signals on the LCD. The display part 102 may adopt a PDP (Plasma Display Panel), OLED (Organic Light Emitting Diode), etc. instead of the LCD. In particular, the display part 102 displays a printing option screen for use in setting of printing options.

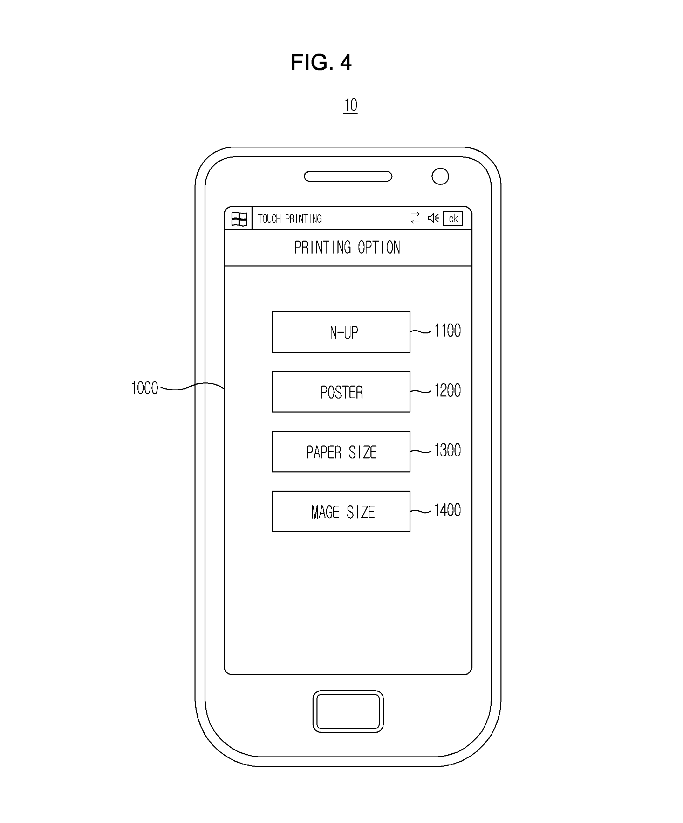

As illustrated in FIG. 4, a printing option screen 1000 contains printing option icons including an "N-UP" printing option icon 1100, a "Poster" printing option ion 1200, a "Paper Size" printing option icon 1300, an "Image Size" printing option icon 1400, etc. for user selection.

An N-UP printing option is a function of printing a plurality of pages on a single side of paper. Set values of the N-UP printing operation may include, e.g., 1 UP, 2UP, 4UP, 6UP, 9UP, and 16UP.

A poster printing option is a function of dividing a single image into a plurality of images and printing the plurality of images respectively on a plurality of sheets of paper. Set values of the poster printing option may include, e.g., 2p, 4p, 8p, 9p and 16p.

A paper size printing option is a function of setting a paper size. Set values of the paper size printing option may include, e.g., Letter, A4, B4, A5 and B5. An image size printing option is a function of setting an image size. Set values of the image size printing option may include, e.g., wallet size, 3x4 inches, 4x6 inches, 5x7 inches and 8x10 inches.

Referring again to FIG. 3, the communication interface unit 110 provides an interface with the image forming apparatus 20 under control of the controller 130. For example, the communication interface unit 110 transmits printing data and printing operation information to the image forming apparatus 20 under control of the controller 130.

The storage unit 120 stores various data regarding printing option setting that are displayable on the display part 102 of the touchscreen 100 and data input by the user or provided by the terminal.

The controller 130 displays the printing option screen 1000, utilized to set various printing options, e.g., N-Up, poster, paper size and image size, on the display part 102 of the touchscreen 100, in response to a user command input via the input part 101 of the touchscreen 100.

If the user selects a desired printing option to set from the printing option screen 1000, the controller 130 displays a preview screen depending on the printing option selected by the user on the display part 102 of the touchscreen 100. Then, the controller 130 receives touch signals when the user performs multi-touch on the preview screen via the input part 101, thereby displaying a preview screen, a set value of the printing option selected by the user has been changed in response to the input multi-touch signals.

In addition, the controller 130 detects first and second touch inputs on the preview screen via the input part 101 of the touchscreen 100 and calculates a distance between first and second touch input points. If the distance between the first and second touch input points varies, the controller 130 changes a set value of the printing option selected by the user on the preview screen. In this case, the set value is changed according to the distance between the first and second touch input points.

As will be described hereinafter, if the user selects the "N-UP" printing option icon 1100 on the printing option screen 1000, the controller 130 displays a preview screen having a preview image depending on the N-UP printing option on the touchscreen 100. The preview image is an image based on a preset number of pages to be printed on a single side of paper (for example, 1 page). The controller 130 detects first and second touch input points on the preview image. If a distance between the first and second touch input points is changed, the controller 130 changes the number of pages to be printed on a single side of paper and displays a preview image containing the changed number of pages to be printed.

In this case, if the distance between the first and second touch input points on the preview image of the preview screen is reduced, the controller 130 increases the number of pages to be contained in the preview image. If the distance between the first and second touch input points on the preview image of the preview screen is increased, the controller 130 reduces the number of pages to be contained in the preview image. In this case, if data to be printed is document data, an increase or reduction in the number of pages occurs on a per document page basis. If data to be printed is image data, an increase or reduction in the number of pages occurs on a per image scale basis.

As will be described hereinafter, if the user selects the "Poster" printing option icon 1200 on the printing option screen 1000, the controller 130 displays a preview screen having a preview image depending on the poster printing option on the touchscreen 100. The preview image is an image of an object based on a preset number of sheets of paper (e.g., 1 sheet of paper). The controller 130 detects first and second touch input points on the preview image. If a distance between the first and second touch input points is changed, the controller 130 changes the number of sheets of paper, on which the object displayed on the initial preview image is split and printed, and displays images of the split parts of the object allotted respectively to the changed number of sheets of paper.

In this case, if the distance between the first and second touch input points on the preview image of the preview screen is reduced, the controller 130 increases the number of sheets of paper corresponding to the number of split parts of the object displayed on the preview image. If the distance between the first and second touch input points on the preview image of the preview screen is increased, the controller 130 reduces the number of sheets of paper corresponding to the split parts of the object displayed on the preview image.

The controller 130 may perform inter-conversion setting between the N-UP printing option and the poster printing option according to a change in the distance between the first and second touch inputs of the preview image of the preview screen depending on the N-UP printing option. For example, if a distance between two touch points is increased in a state in which the N-UP printing option is set to 1-UP, the controller 130 recognizes a current printing option as the poster printing option and displays a converted preview image of the N-UP printing operation.

Also, if the distance between the two touch points is reduced in a state in which the image displayed on the preview image of the preview screen depending on the poster printing option is split to the maximum extent, the controller 130 recognizes a current printing option as the N-UP printing option and displays a converted preview image of the N-UP printing option.

As will be described hereinafter, if the user selects the "Paper Size" printing option icon 1300 on the printing option screen 1000, the controller 130 displays a preview screen having a preview image depending on the paper size printing option on the touchscreen 100. The preview image is an image based on a preset page size (e.g., A4). The controller 130 detects first and second touch input points on the preview image. If a distance between the first and second touch input points is changed, the controller 130 changes the paper size of the preview image and displays the preview image having the changed paper size.

In this case, if the distance between the first and second touch input points on the preview image of the preview screen is reduced, the controller 130 reduces the paper size of the preview image. If the distance between the first and second touch input points on the preview image of the preview screen is increased, the controller 130 increases the paper size of the preview image.

As will be described hereinafter, if the user selects the "Image Size" printing option icon 1400 on the printing option screen 1000, the controller 130 displays a preview screen having a preview image depending on the image size printing option on the touchscreen 100. The preview image is an image based on a preset image size. The controller 130 detects first and second touch input points on the preview image. If a distance between the first and second touch input points is changed, the controller changes the size of the preview image and displays the preview image having the changed size.

In this case, if the distance between the first and second touch input points on the preview image of the preview screen is reduced, the controller 130 reduces the size of the preview image. If the distance between the first and second touch input points on the preview image of the preview screen is increased, the controller 130 increases the size of the preview image.

As described above, in the printing option display apparatus in accordance with the embodiment of the present disclosure, with motions to increase or decrease the distance between the first and second touch input points on the touchscreen 100 on a per printing option basis, any one of a preview image in which the number of pages to be printed on a single side of paper is changed, a preview image in which the number of sheets of paper corresponding to split parts of a displayed object is changed, a preview image in which a paper size is changed, and a preview image in which an image size is changed may be displayed.

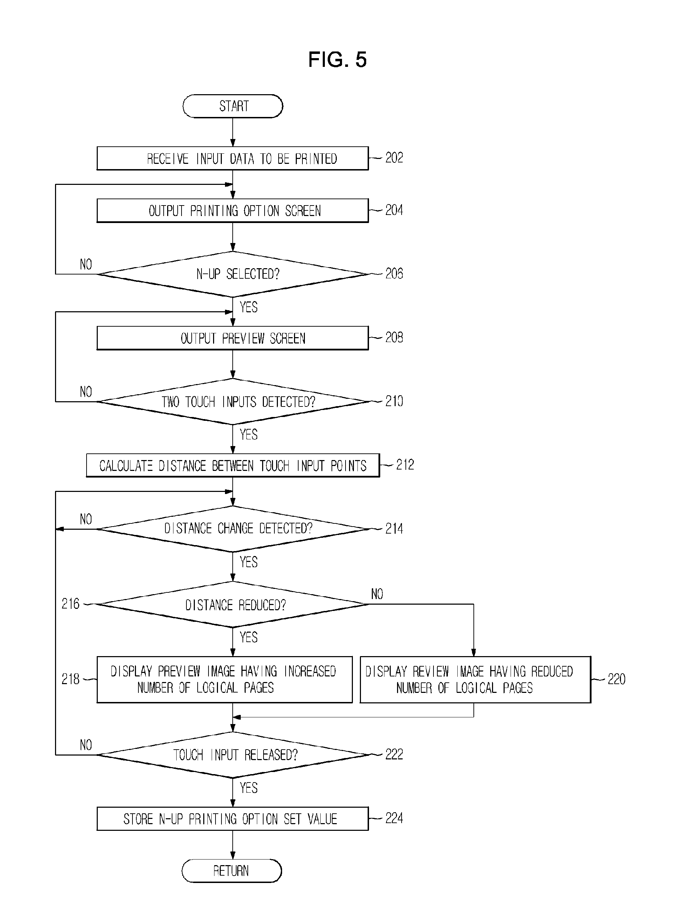

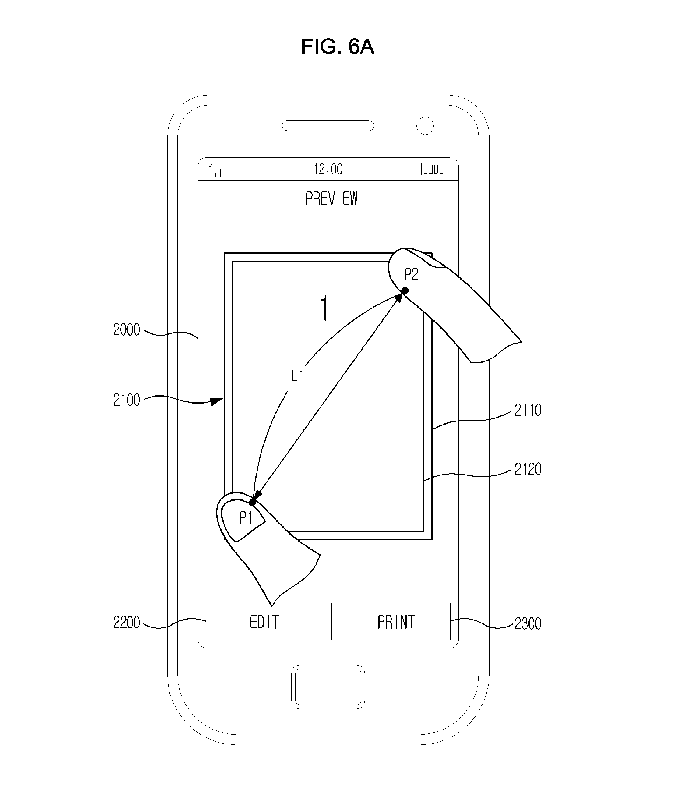

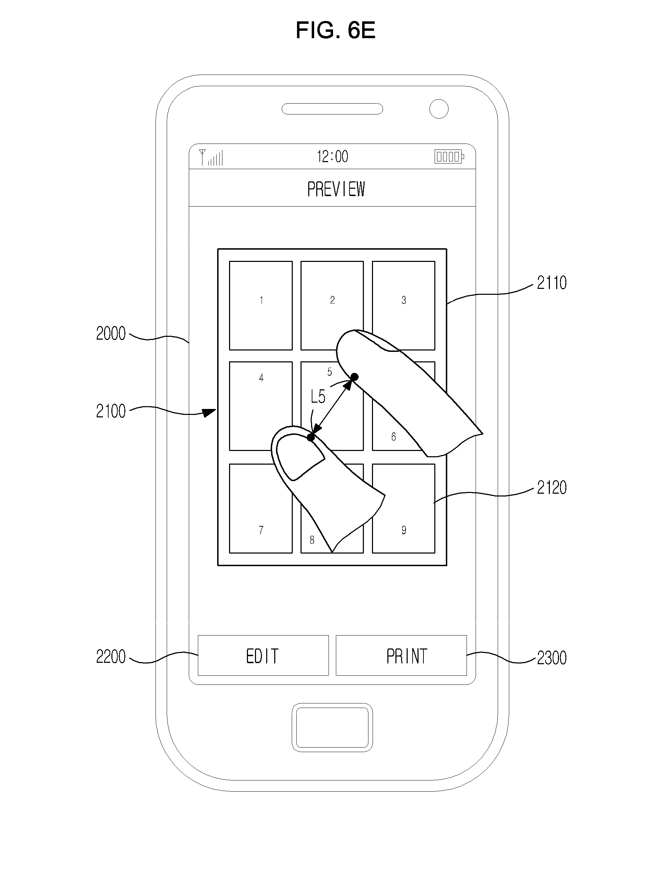

FIG. 5 is a control flowchart illustrating one embodiment of a printing option display method using the printing option display apparatus in accordance with the embodiment of the present disclosure. FIGS. 6A to 6F are views illustrating motions of the printing option display method of FIG. 5.

Referring to FIG. 5 with reference to FIGS. 6A to 6F, the controller 130 receives data to be printed via the touchscreen 100 (202).

If data to be printed by the user is input, the controller 130 outputs the printing option screen 1000 to the touchscreen 100 (204).

After outputting the printing option screen 1000, the controller 130 judges whether or not the user selects the "N-UP" printing option icon 1100 from among several printing option icons on the printing option screen 1000 (206).

If the "N-UP" printing option icon 1100 is selected, the controller 130 outputs a preview screen 2000 containing a preview image 2100 depending on the N-UP printing option on the touchscreen 100 (208). The preview image 2100 includes a physical page 2110 that represents a sheet of paper and a logical page 2120 provided in the physical page 2110. As will be described hereinafter, if a set value of the N-UP printing option is changed, the number of the logical pages 2120 is changed. Here, the number of the logical pages 2120 refers to the number of pages to be printed on a single side of paper.

After outputting the preview screen 2000, the controller 130 judges whether or not two touch inputs by the user are detected from the preview image 2100 of the preview image 2000 (210).

The controller 130 calculates a distance between the two touch inputs, i.e. first and second touch input points on the preview image 2100 (212).

After calculating the distance between the first and second touch input points, the controller 130 detects whether or not change in the distance between the first and second touch input points occurs (214).

To increase or reduce the number of the logical pages 2120 of the preview image 2100 if occurrence of change in the distance between the first and second touch input points is detected in operating mode 214, the controller 130 judges whether or not the distance between the first and second touch input points is reduced (216). If it is judged in operating mode 216 that the distance between the first and second touch input points is reduced, the controller 130 increases the number of the logical pages 2120 of the preview image 2100 displayed on the preview screen 2000 of the touchscreen 100 and displays the preview image 2100 having the increased number of the logical pages 2120 (218). That is, the controller 130 increases the number of the logical pages 2120 of the preview image 2100 if the distance between the first and second touch input points is reduced.

If it is judged in operating mode 216 that the distance between the first and second touch input points is increased, the controller 130 reduces the number of the logical pages 2120 of the preview image 2100 displayed on the preview screen 2000 of the touchscreen 100 and displays the preview image 2100 having the reduced number of the logical pages 2120 (220). That is, the controller 130 reduces the number of the logical pages 2120 of the preview image 2100 if the distance between the first and second touch input points is increased.

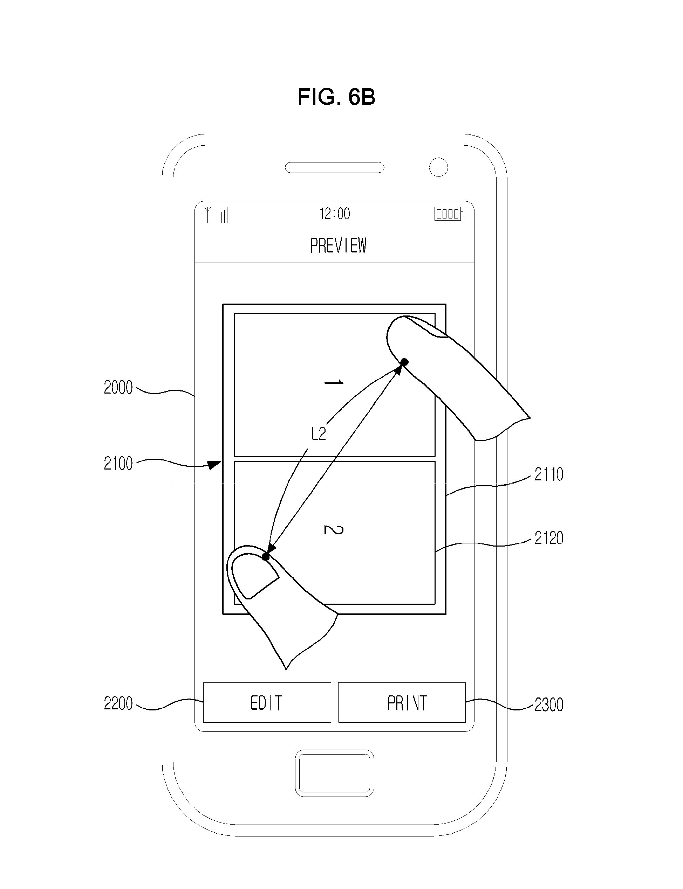

As illustrated in FIG. 6A, assuming that points where the user touches the preview image 2100 displayed on the preview screen 2000 with two fingers are referred to as P1 and P2 and a distance between the touch points is referred to as L1, if the user reduces a distance between the user's fingers to reduce the distance between the touch points from L1 to L2 as illustrated in FIG. 6B, the preview image 2100 having a single logical page 2120 illustrated in FIG. 6A is changed to the preview image 2100 having two logical pages 2120 depending on a distance difference.

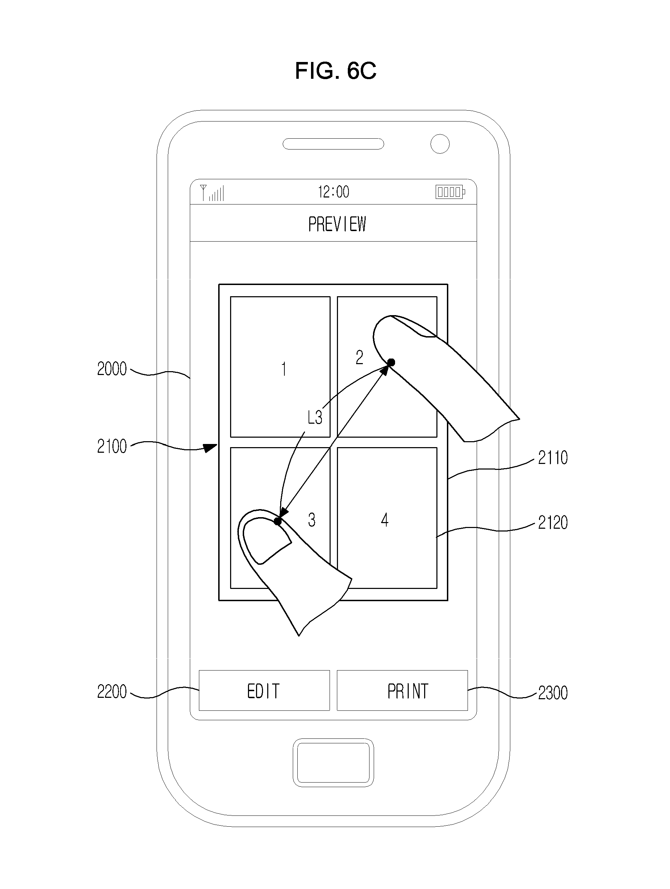

As illustrated in FIG. 6C, if the user further reduces the distance between the user's fingers to reduce the distance between the touch points from L2 to L3, the preview image 2100 having the two logical pages 2120 illustrated in FIG. 6B is changed to the preview image 2100 having four logical pages 2120 depending on a distance difference.

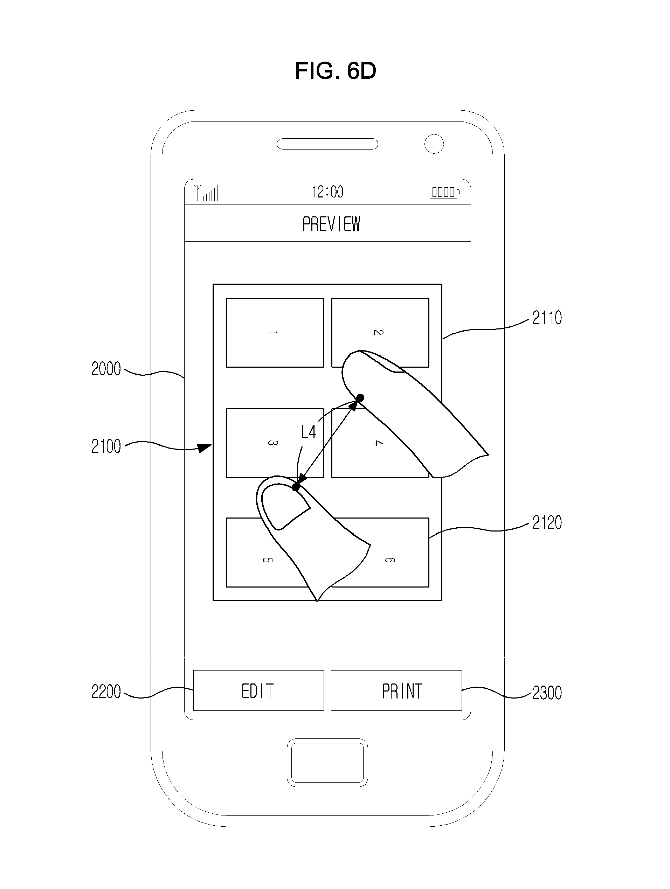

Similar to FIGS. 6A to 6C, as illustrated in FIG. 6D to FIG. 6F, the number of the logical pages 2120 of the preview image 2100 may be further increased as the distance between the touch points is reduced.

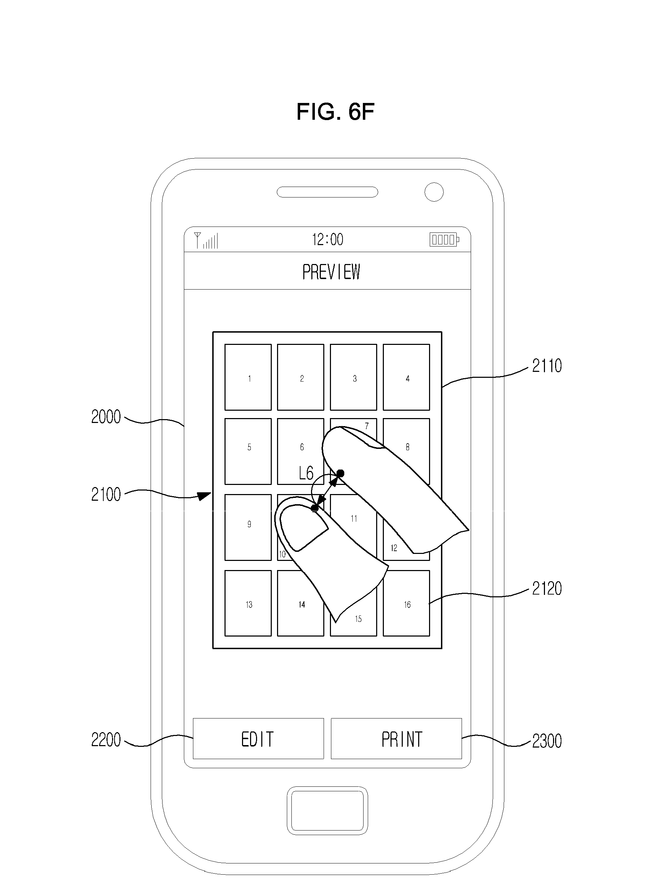

Similar to the case where the distance between the two fingers is reduced, when increasing the distance between the two fingers, the number of the logical pages 2120 of the preview image 2100 is reduced as illustrated in FIG. 6F to FIG. 6A.

Referring again to FIG. 5, if the distance between the first and second touch input points is changed, after displaying the preview image 2100 in which the number of the logical pages 2120 is increased or decreased, the controller 130 judges whether or not touch inputs with respect to the preview image 2100 displayed on the preview screen 2000 of the touchscreen 100 are released (222).

If it is judged in operating mode 222 that the touch inputs are not released, the controller 130 moves to operating mode 214 and performs the following operating modes. On the other hand, if the touch inputs are released, the controller 130 stores a value corresponding to the number of the logical pages 2120 of the preview image 2100 on the preview screen 2000 as a set value of the N-UP printing option (224). In this way, setting of the N-UP printing option by multi-touch input is completed.

Thereafter, if the user pushes a print button 2300, the controller 130 controls transmission of printing option information including the set value of the N-UP printing option as well as printing data to the image forming apparatus 20, thereby allowing the image forming apparatus 20 to print the printing data according to the printing option information. On the other hand, if the user pushes an edit button 2200 in order to set another printing option, the controller 130 again displays the printing option screen 1000 on the touchscreen 100.

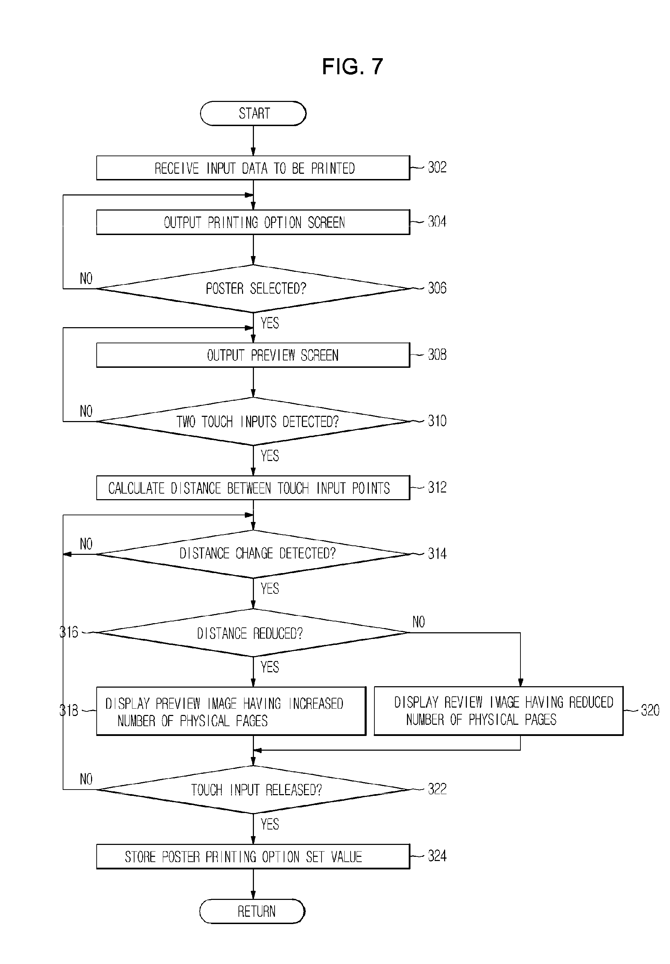

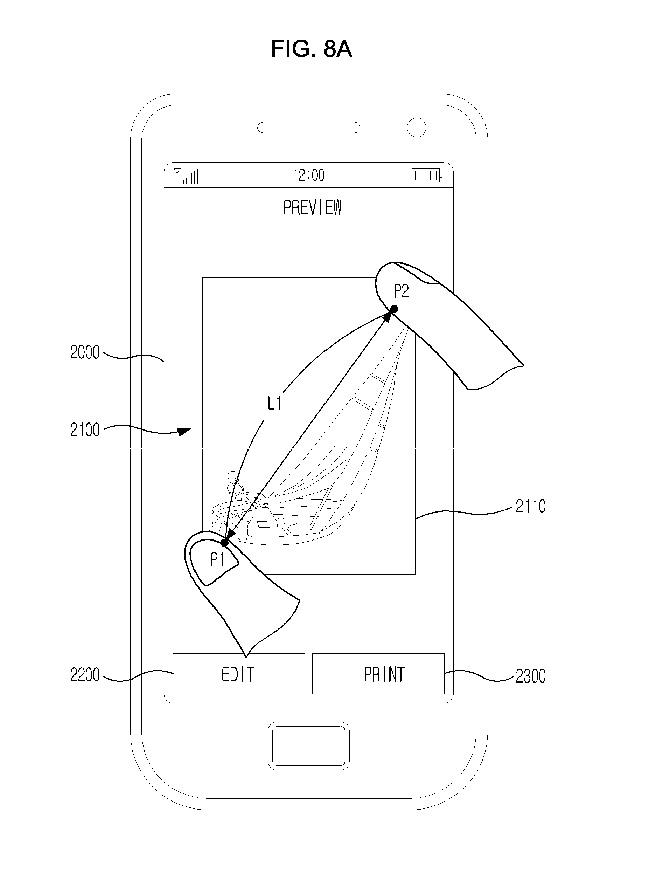

FIG. 7 is a control flowchart illustrating another embodiment of the printing option display method using the printing option display apparatus in accordance with the embodiment of the present disclosure. FIGS. 8A to 8E are views illustrating motions of the printing option display method of FIG. 7.

Referring to FIG. 7 with reference to FIGS. 8A to 8F, the controller 130 receives data to be printed via the touchscreen 100 (302).

If data to be printed by the user is input, the controller 130 outputs the printing option screen 1000 to the touchscreen 100 (304).

After outputting the printing option screen 1000, the controller 130 judges whether or not the user selects the "Poster" printing option icon 1200 from among several printing option icons on the printing option screen 1000 (306).

If the "Poster" printing option icon 1200 is selected, the controller 130 outputs a preview screen 2000 containing a preview image 2100 depending on the poster printing option on the touchscreen 100 (308). The preview image 2100 includes a physical page 2110 that represents a sheet of paper. An object as an image to be printed is displayed on the physical page 2110. As will be described hereinafter, if a set value of the poster printing option is changed, the number of the physical pages 2110 is changed. Here, the number of the physical pages 2110 refers to the number of sheet of paper corresponding to the number of split parts of the object displayed on the initial preview image 2100.

After outputting the preview screen 2000, the controller 130 judges whether or not two touch inputs by the user are detected from the preview image 2100 of the preview image 2000 (310).

The controller 130 calculates a distance between the two touch inputs, i.e. first and second touch input points on the preview image 2100 (312).

After calculating the distance between the first and second touch input points, the controller 130 detects whether or not change in the distance between the first and second touch input points occurs (314).

To increase or reduce the number of the physical pages 2110 of the preview image 2100 if occurrence of change in the distance between the first and second touch input points is detected in operating mode 314, the controller 130 judges whether or not the distance between the first and second touch input points is reduced (316).

If it is judged in operating mode 316 that the distance between the first and second touch input points is reduced, the controller 130 increases the number of the physical pages 2110 of the preview image 2100 displayed on the preview screen 2000 of the touchscreen 100 and displays the preview image 2100 having the increased number of the physical pages 2110 (318). That is, the controller 130 increases the number of the physical pages 2110 of the preview image 2100 if the distance between the first and second touch input points is reduced.

If it is judged in operating mode 316 that the distance between the first and second touch input points is increased, the controller 130 reduces the number of the physical pages 2110 of the preview image 2100 displayed on the preview screen 2000 of the touchscreen 100 and displays the preview image 2100 having the reduced number of the physical pages 2110 (320). That is, the controller 130 reduces the number of the physical pages 2110 of the preview image 2100 if the distance between the first and second touch input points is increased.

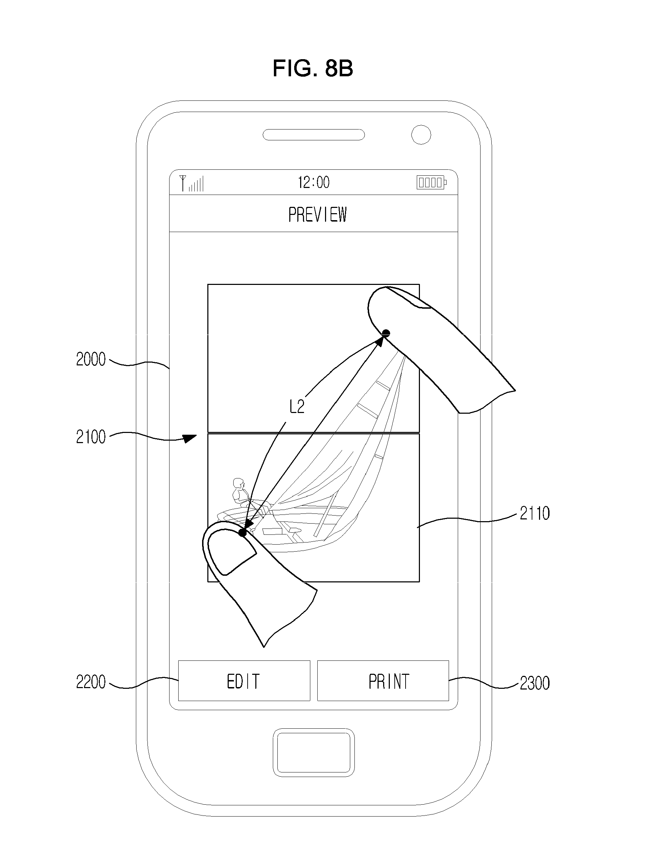

As illustrated in FIG. 8A, assuming that points where the user touches the preview image 2100 displayed on the preview screen 2000 with two fingers are referred to as P1 and P2 and a distance between the touch points is referred to as L1, if the user reduces a distance between the user's fingers to reduce the distance between the touch points from L1 to L2 as illustrated in FIG. 8B, the preview image 2100 having a single physical page 2110 illustrated in FIG. 8A is changed to the preview image 2100 having two physical pages 2110 depending on a distance difference.

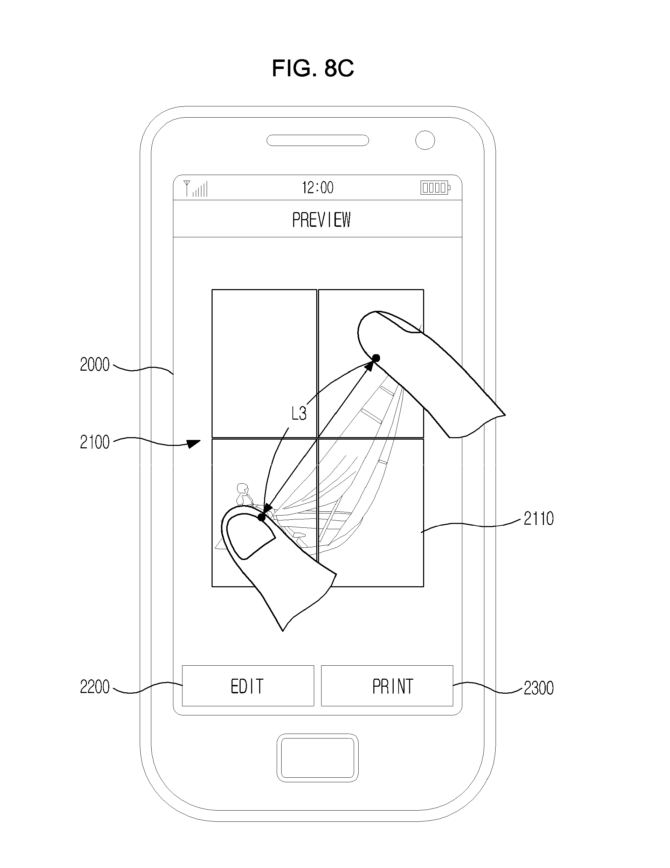

As illustrated in FIG. 8C, if the user further reduces the distance between the user's fingers to reduce the distance between the touch points from L2 to L3, the preview image 2100 having the two physical pages 2120 illustrated in FIG. 8B is changed to the preview image 2100 having four physical pages 2110 depending on a distance difference.

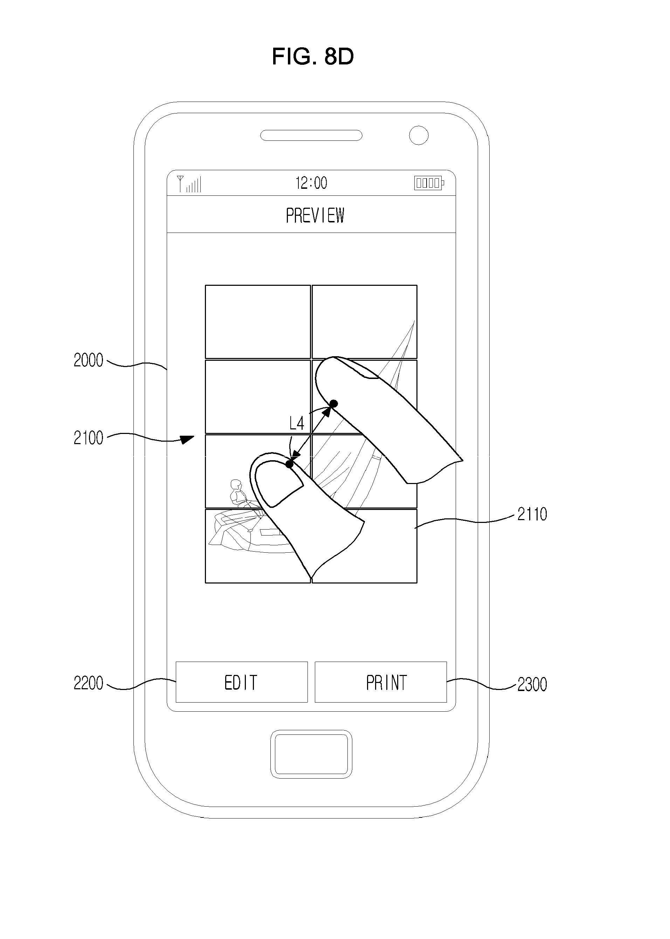

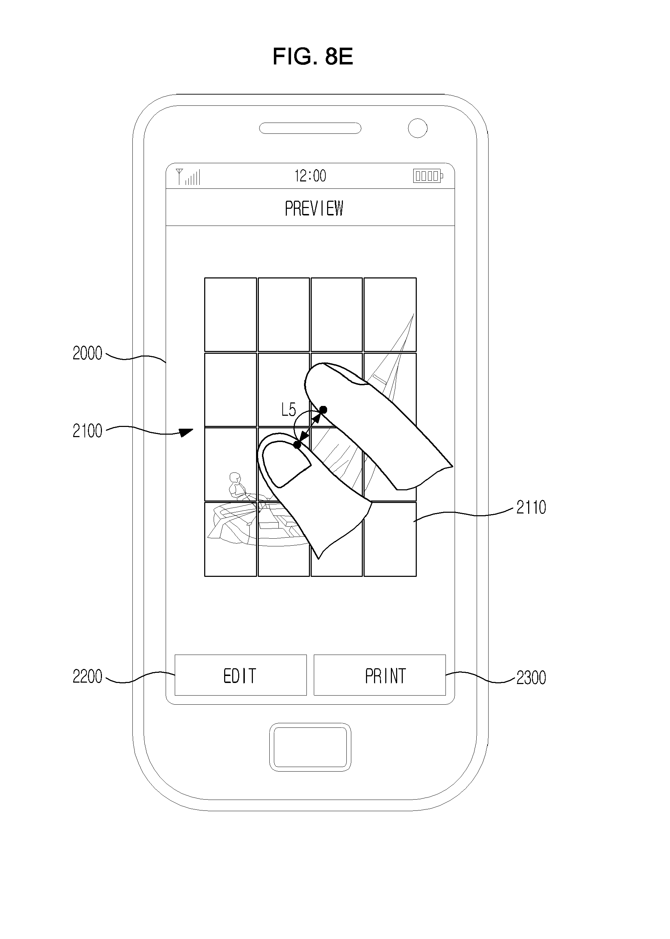

Similar to FIGS. 8A to 8C, as illustrated in FIG. 8D and FIG. 8E, the number of the physical pages 2110 of the preview image 2100 may be further increased as the distance between the touch points is reduced.

Similar to the case where the distance between the two fingers is reduced, when increasing the distance between the two fingers, the number of the physical pages 2110 of the preview image 2100 is reduced as illustrated in FIG. 8E to FIG. 8A.

Referring again to FIG. 7, if the distance between the first and second touch input points is changed, after displaying the preview image 2100 in which the number of the physical pages 2110 is increased or decreased, the controller 130 judges whether or not touch inputs with respect to the preview image 2100 displayed on the preview screen 2000 of the touchscreen 100 are released (322).

If it is judged in operating mode 322 that the touch inputs are not released, the controller 130 moves to operating mode 314 and performs the following operating modes. On the other hand, if the touch inputs are released, the controller 130 stores a value corresponding to the number of the physical pages 2110 of the preview image 2100 on the preview screen 2000 as a set value of the poster printing option (324). In this way, setting of the poster printing option by multi-touch input is completed.

Thereafter, if the user pushes the print button 2300, the controller 130 controls transmission of printing option information including the set value of the poster printing option as well as printing data to the image forming apparatus 20, thereby allowing the image forming apparatus 20 to print the printing data according to the printing option information. On the other hand, if the user pushes the edit button 2200 in order to set another printing option, the controller 130 again displays the printing option screen 1000 on the touchscreen 100.

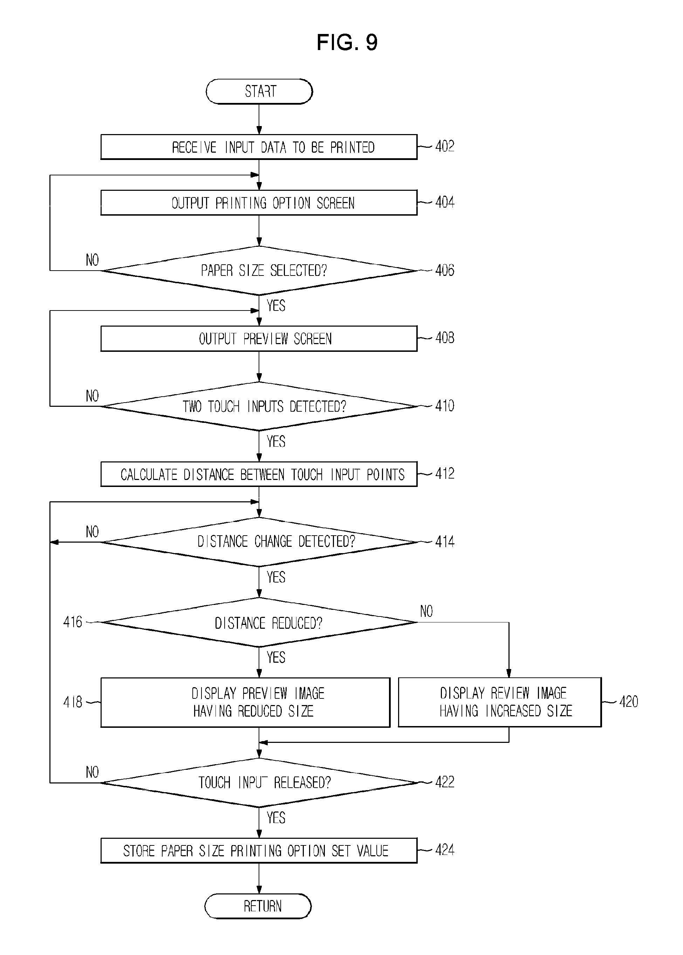

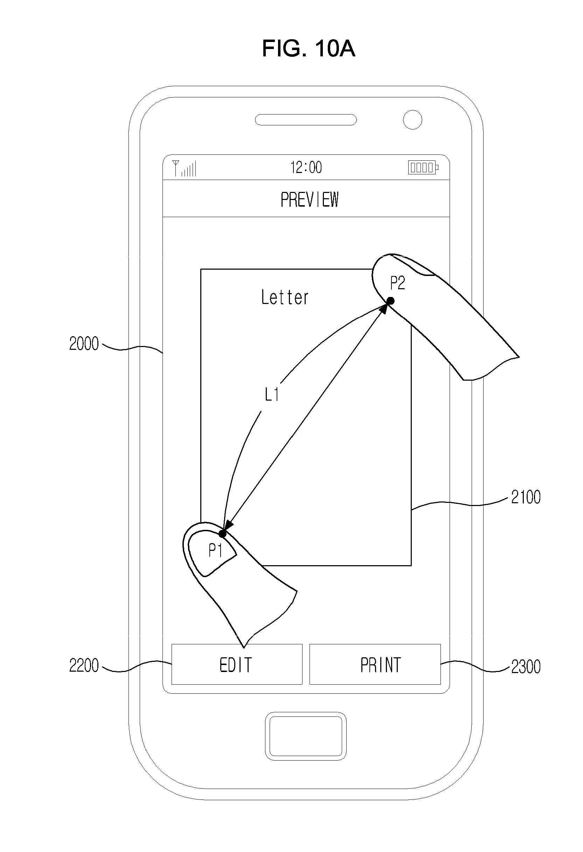

FIG. 9 is a control flowchart illustrating a further embodiment of a printing option display method using the printing option display apparatus in accordance with the embodiment of the present disclosure. FIGS. 10A to 10D are views illustrating motions of the printing option display method of FIG. 9.

Referring to FIG. 9 with reference to FIGS. 10A to 10D, the controller 130 receives data to be printed via the touchscreen 100 (402).

If data to be printed by the user is input, the controller 130 outputs the printing option screen 1000 to the touchscreen 100 (404).

After outputting the printing option screen 1000, the controller 130 judges whether or not the user selects the "Paper Size" printing option icon 1300 from among several printing option icons on the printing option screen 1000 (406).

If the "Paper Size" printing option icon 1300 is selected, the controller 130 outputs a preview screen 2000 containing a preview image 2100 depending on the paper size printing option on the touchscreen 100 (408). As will be described hereinafter, if a set value of the paper size printing option is changed, a paper size is changed.

Here, the paper size may include, e.g., Letter, A4, B4, A5 and B5.

After outputting the preview screen 2000, the controller 130 judges whether or not two touch inputs by the user are detected from the preview image 2100 of the preview image 2000 (410).

The controller 130 calculates a distance between the two touch inputs, i.e. first and second touch input points on the preview image 2100 (412).

After calculating the distance between the first and second touch input points, the controller 130 detects whether or not change in the distance between the first and second touch input points occurs (414).

To increase or reduce the paper size of the preview image 2100 if occurrence of change in the distance between the first and second touch input points is detected in operating mode 414, the controller 130 judges whether or not the distance between the first and second touch input points is reduced (416).

If it is judged in operating mode 416 that the distance between the first and second touch input points is reduced, the controller 130 increases the paper size of the preview image 2100 displayed on the preview screen 2000 of the touchscreen 100 and displays the preview image 2100 corresponding to the reduced paper size (418).

That is, the controller 130 reduces the paper size of the preview image 2100 if the distance between the first and second touch input points is reduced.

If it is judged in operating mode 416 that the distance between the first and second touch input points is increased, the controller 130 increases the paper size of the preview image 2100 displayed on the preview screen 2000 of the touchscreen 100 and displays the preview image 2100 corresponding to the increased paper size (420). That is, the controller 130 increases the paper size of the preview image 2100 if the distance between the first and second touch input points is increased.

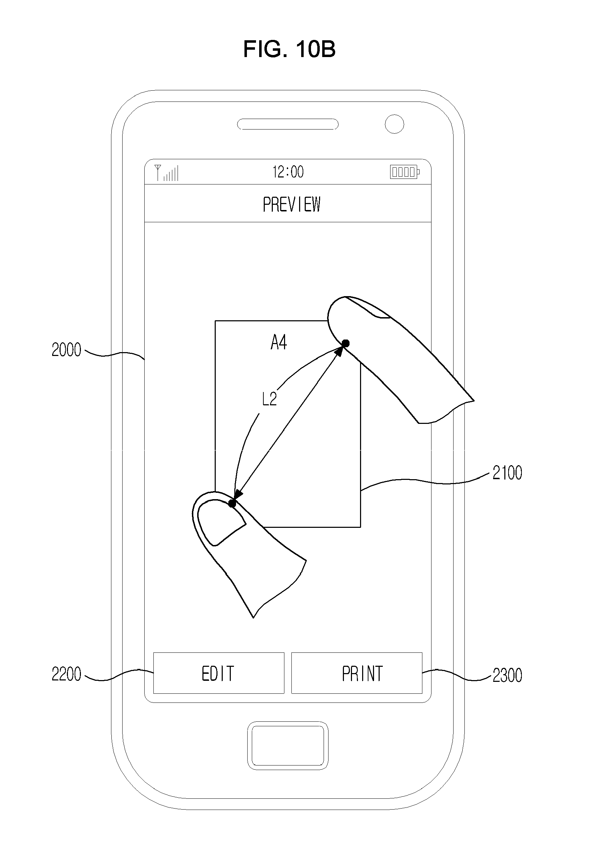

As illustrated in FIG. 10A, assuming that points where the user touches the preview image 2100 displayed on the preview screen 2000 with two fingers are referred to as P1 and P2 and a distance between the touch points is referred to as L1, if the user reduces a distance between the user's fingers to reduce the distance between the touch points from L1 to L2 as illustrated in FIG. 10B, the preview image 2100 corresponding to the paper size of letter illustrated in FIG. 10A is changed to the preview image 2100 corresponding to the paper size of A4 depending on a distance difference.

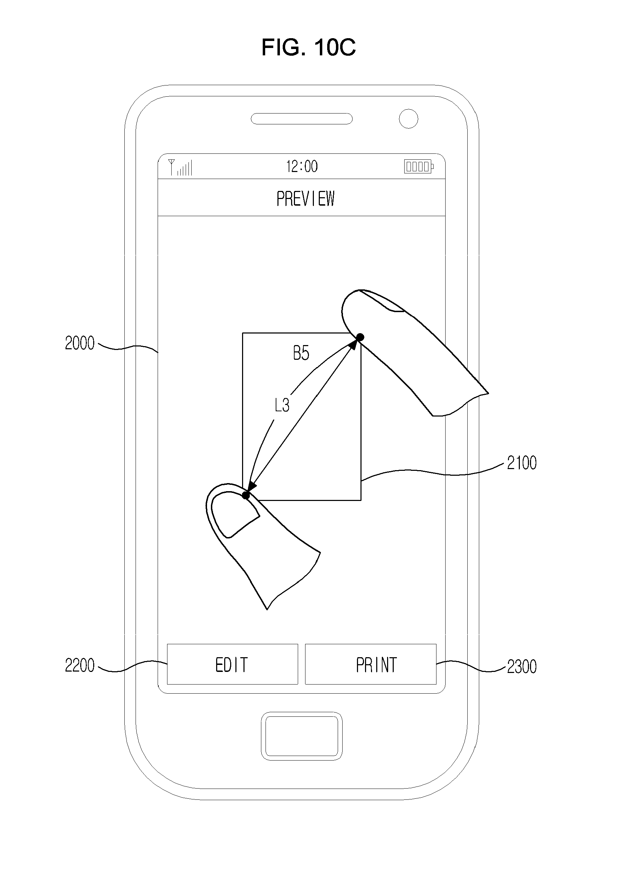

As illustrated in FIG. 10C, if the user further reduces the distance between the user's fingers to reduce the distance between the touch points from L2 to L3, the preview image 2100 corresponding to the paper size of A4 illustrated in FIG. 10B is changed to the preview image 2100 corresponding to the paper size of B5 depending on a distance difference.

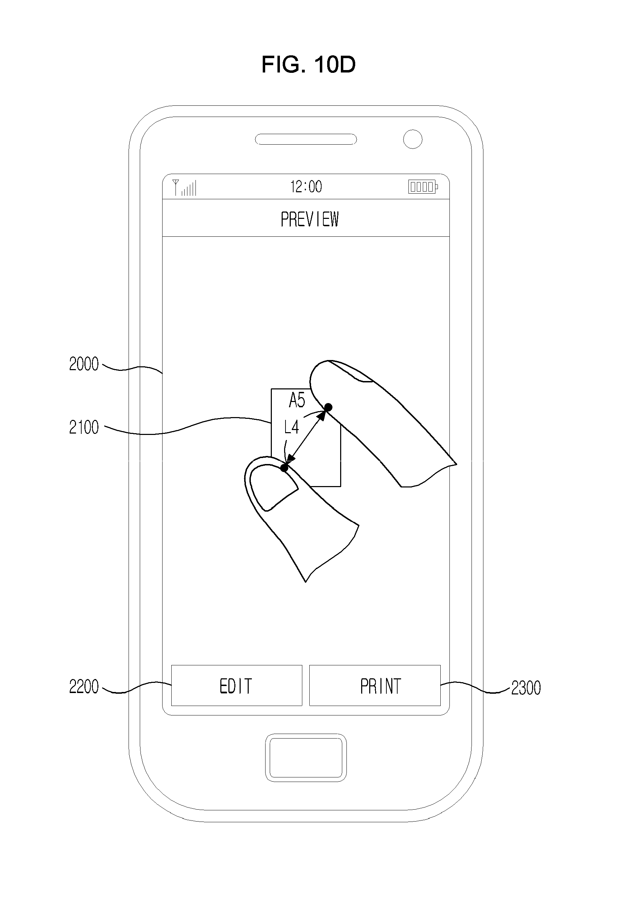

As illustrated in FIG. 10D, if the user further reduces the distance between the user's fingers to reduce the distance between the touch points from L3 to L4, the preview image 2100 corresponding to the paper size of B4 illustrated in FIG. 10C is changed to the preview image 2100 corresponding to the paper size of A5 depending on a distance difference.

Similar to the case where the distance between the two fingers is reduced, when increasing the distance between the two fingers, the paper size of the preview image 2100 is increased as illustrated in FIG. 10D to FIG. 10A.

Referring again to FIG. 9, if the distance between the first and second touch input points is changed, after displaying the preview image 2100 corresponding to the increased or decreased paper size, the controller 130 judges whether or not touch inputs with respect to the preview image 2100 displayed on the preview screen 2000 of the touchscreen 100 are released (422).

If it is judged in operating mode 422 that the touch inputs are not released, the controller 130 moves to operating mode 414 and performs the following operating modes. On the other hand, if the touch inputs are released, the controller 130 stores a value corresponding to the paper size of the preview image 2100 on the preview screen 2000 as a set value of the paper size printing option (424). In this way, setting of the paper size printing option by multi-touch input is completed.

Thereafter, if the user pushes the print button 2300, the controller 130 controls transmission of printing option information including the set value of the paper size printing option as well as printing data to the image forming apparatus 20, thereby allowing the image forming apparatus 20 to print the printing data according to the printing option information. On the other hand, if the user pushes the edit button 2200 in order to set another printing option, the controller 103 again displays the printing option screen 1000 on the touchscreen 100.

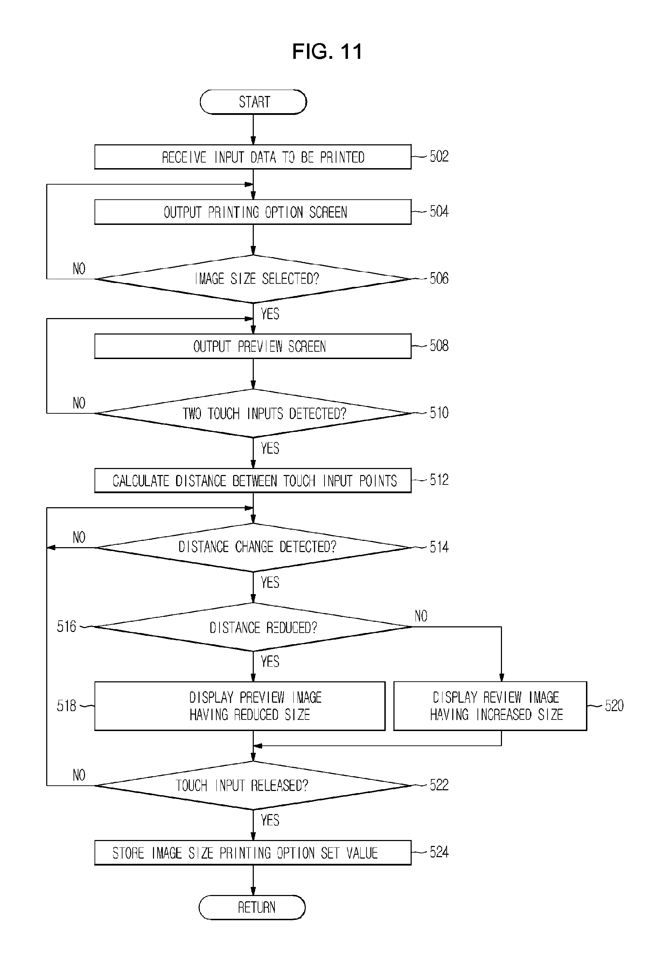

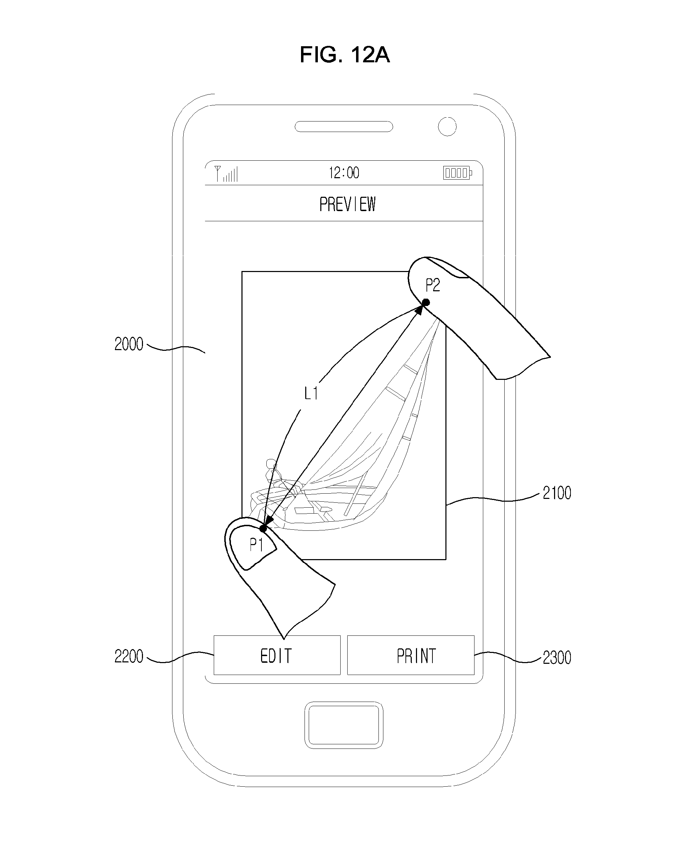

FIG. 11 is a control flowchart illustrating a still further embodiment of a printing option display method using the printing option display apparatus in accordance with the embodiment of the present disclosure. FIGS. 12A to 12D are views illustrating motions of the printing option display method of FIG. 11.

Referring to FIG. 11 with reference to FIGS. 12A to 12D, the controller 130 receives data to be printed via the touchscreen 100 (502).

If data to be printed by the user is input, the controller 130 outputs the printing option screen 1000 to the touchscreen 100 (504).

After outputting the printing option screen 1000, the controller 130 judges whether or not the user selects the "Image Size" printing option icon 1400 from among several printing option icons on the printing option screen 1000 (506).

If the "Image Size" printing option icon 1400 is selected, the controller 130 outputs a preview screen 2000 containing a preview image 2100 depending on the image size printing option on the touchscreen 100 (508). The preview image 2100 is an image that represents an image size. As will be described hereinafter, if a set value of the image size printing option is changed, an image size is changed. Here, the image size may include, e.g., wallet size, 3x4 inches, 4x6 inches, 5x7 inches and 8x10 inches.

After outputting the preview screen 2000, the controller 130 judges whether or not two touch inputs by the user are detected from the preview image 2100 of the preview image 2000 (510).

The controller 130 calculates a distance between the two touch inputs, i.e. first and second touch input points on the preview image 2100 (512).

After calculating the distance between the first and second touch input points, the controller 130 detects whether or not change in the distance between the first and second touch input points occurs (514).

To increase or reduce the image size of the preview image 2100 if occurrence of change in the distance between the first and second touch input points is detected in operating mode 514, the controller 130 judges whether or not the distance between the first and second touch input points is reduced (516).

If it is judged in operating mode 516 that the distance between the first and second touch input points is reduced, the controller 130 reduces the image size of the preview image 2100 displayed on the preview screen 2000 of the touchscreen 100 and displays the preview image 2100 having the image of a reduced size (518). That is, the controller 130 reduces the image size of the preview image 2100 if the distance between the first and second touch input points is reduced.

If it is judged in operating mode 516 that the distance between the first and second touch input points is increased, the controller 130 increases the image size of the preview image 2100 displayed on the preview screen 2000 of the touchscreen 100 and displays the preview image 2100 having the image of an increased size (520).

That is, the controller 130 increases the image size of the preview image 2100 if the distance between the first and second touch input points is increased.

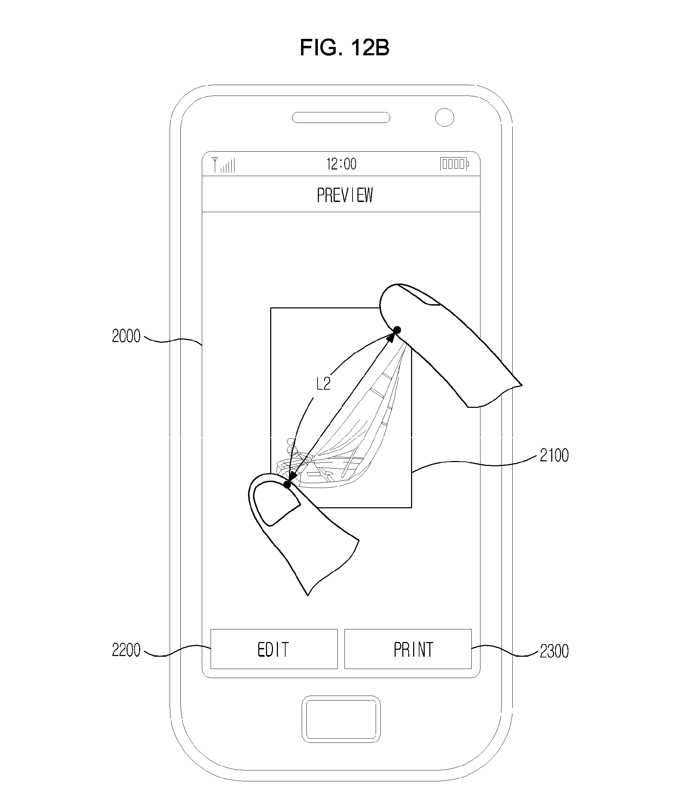

As illustrated in FIG. 12A, assuming that points where the user touches the preview image 2100 displayed on the preview screen 2000 with two fingers are referred to as P1 and P2 and a distance between the touch points is referred to as L1, if the user reduces a distance between the user's fingers to reduce the distance between the touch points from L1 to L2 as illustrated in FIG. 12B, the preview image 2100 having a first image size illustrated in FIG. 12A is changed to the preview image 2100 having a second image size depending on a distance difference.

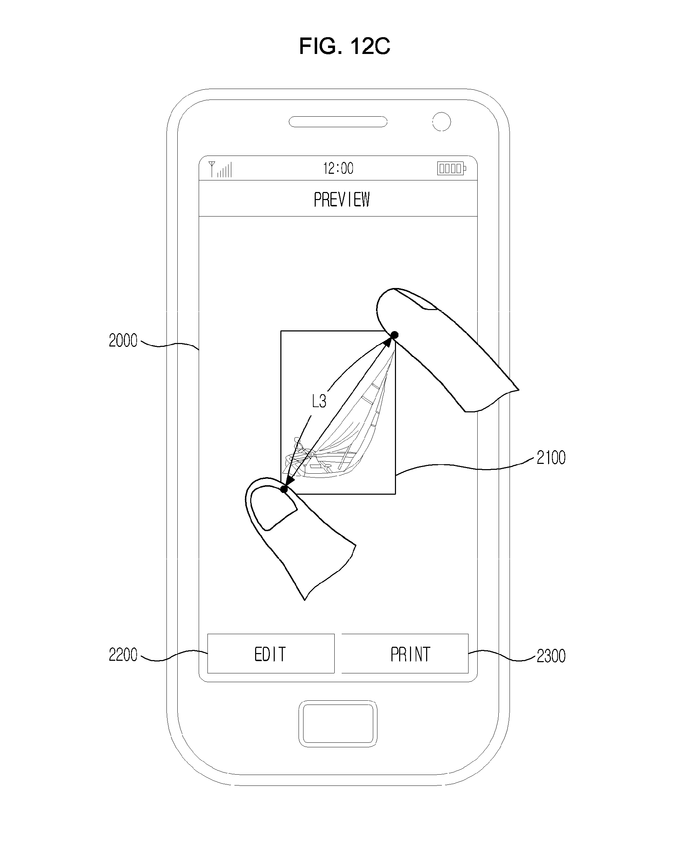

As illustrated in FIG. 12C, if the user further reduces the distance between the user's fingers to reduce the distance between the touch points from L2 to L3, the preview image 2100 having the second image size illustrated in FIG. 12B is changed to the preview image 2100 having a third image size less than the second image size depending on a distance difference.

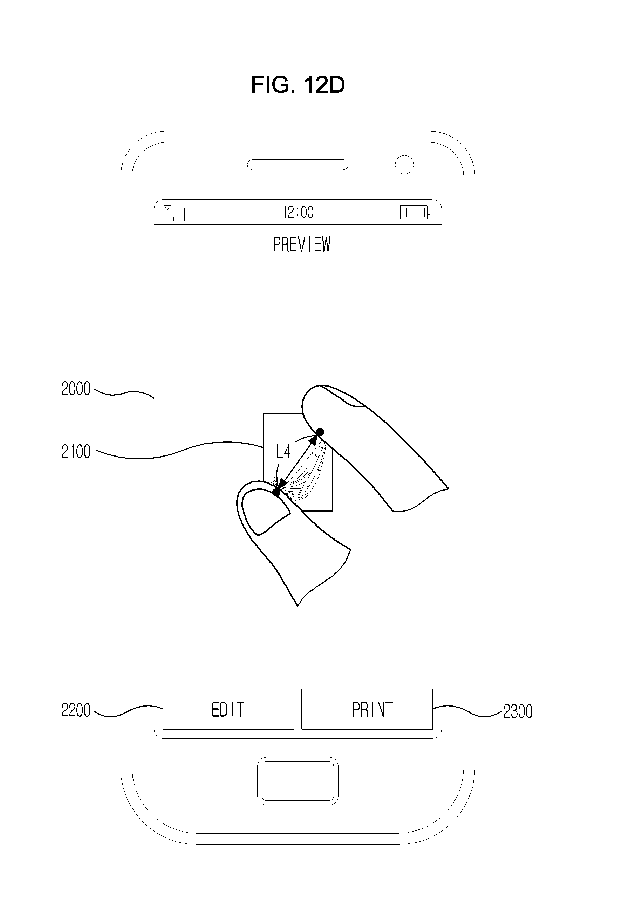

As illustrated in FIG. 12D, if the user further reduces the distance between the user's fingers to reduce the distance between the touch points from L3 to L4, the preview image 2100 having the third image size illustrated in FIG. 12C is changed to the preview image 2100 having a fourth image size less than the third image size depending on a distance difference.

Similar to the case where the distance between the two fingers is reduced, when increasing the distance between the two fingers, the image size of the preview image 2100 is reduced as illustrated in FIG. 12D to FIG. 12A.

Referring again to FIG. 11, if the distance between the first and second touch input points is changed, after displaying the preview image 2100 having the increased or increased size of the image, the controller 130 judges whether or not touch inputs with respect to the preview image 2100 displayed on the preview screen 2000 of the touchscreen 100 are released (522).

If it is judged in operating mode 522 that the touch inputs are not released, the controller 130 moves to operating mode 514 and performs the following operating modes. On the other hand, if the touch inputs are released, the controller 130 stores a value corresponding to the image size of the preview image 2100 on the preview screen 2000 as a set value of the image size printing option (524). In this way, setting of the image size printing option by multi-touch input is completed.

Thereafter, if the user pushes the print button 2300, the controller 130 controls transmission of printing option information including the set value of the image size printing option as well as printing data to the image forming apparatus 20, thereby allowing the image forming apparatus 20 to print the printing data according to the printing option information. On the other hand, if the user pushes the edit button 2200 in order to set another printing option, the controller 103 again displays the printing option screen 1000 on the touchscreen 100.

As is apparent from the above description, according to an aspect of the present disclosure, after a preview image is displayed on a touchscreen, the number of pages contained in the preview image, the number of sheets of paper corresponding to the number of split parts of an object to be displayed on the preview image, the paper size of the preview image, or the size of the preview image may be changed based on the kind of a printing option selected by a user and change in a distance between two user touch points on the preview image, which enables convenient and rapid intuitive setting of printing options in relation to N-UP, poster, paper size and actual size of an image to be printed.

Although a few embodiments of the present disclosure have been shown and described, it would be appreciated by those skilled in the art that changes may be made in these embodiments without departing from the principles of the invention, the scope of which is defined in the claims.

## Claims

1. A printing option display method of an apparatus having a multi-touch input touchscreen, comprising:
receiving any one of a plurality of printing options input by a user;
displaying a preview screen depending on the input printing option on the touchscreen; and
detecting first and second touch input points on the preview screen, and
displaying a changed preview screen, based on a changed set value of the input printing option, according to a change in a distance between the first and second touch input points.

2. The printing option display method according to claim 1, wherein the input printing option includes any one of N-UP, poster, paper size and image size.

3. The printing option display method according to claim 2, wherein, if the input printing option is N-UP, the number of pages contained in a preview image displayed on the preview screen is changed according to the distance between the first and second touch input points.

4. The printing option display method according to claim 2, wherein, if the input printing option is poster, the number of sheets of paper, by which an object of a preview image displayed on the preview screen is split, is changed according to the distance between the first and second touch input points.

5. The printing option display method according to claim 2, wherein, if the input printing option is paper size, the paper size of a preview image displayed on the preview screen is changed according to the distance between the first and second touch input points.

6. The printing option display method according to claim 2, wherein, if the input printing option is image size, the size of a preview image displayed on the preview screen is changed according to the distance between the first and second touch input points.

7. A printing option display apparatus comprising:
a multi-touch input touchscreen; and
a controller, which displays a preview screen, depending on a selected one of a plurality of printing options input by a user, on the touchscreen, detects first and second touch input points on the preview screen, and displays a changed preview screen based on a changed set value of the input printing option, according to a change in a distance between the first and second touch input points.
